# FASCICULE DE BREVET EUROPEEN

(11) **EP 3 519 231 B1**
(45) Date de publication et mention de la délivrance du brevet: **18.11.2020**
(21) Numéro de dépôt: 17777570.7
(22) Date de dépôt: 28.09.2017
(51) Int. Cl.: B60K 35/00, B60K 37/06, G05G 1/08, G06F 3/038, G06F 3/041, G06F 3/044, G06F 3/0362, G02B 6/00, G08C 19/10, G05G 1/10, H01H 9/18, H01H 19/00, H01H 19/02, H03K 17/96, B60R 11/02, G06F 3/0481, G06F 3/0482, G06F 3/0485, G06F 3/0488

(54) **INTERFACE POUR VÉHICULE AUTOMOBILE ET PROCÉDÉ D'INTERFAÇAGE**
SCHNITTSTELLE FÜR KRAFTFAHRZEUG UND SCHNITTSTELLENVERFAHREN
INTERFACE FOR MOTOR VEHICLE AND INTERFACING METHOD

(30) Priorité: 28.09.2016 FR 1659255
(43) Date de publication de la demande: 07.08.2019
(73) Titulaire: DAV, 94046 Créteil Cedex (FR)
(72) Inventeur: DABIC, Stéphanie, 94046 Créteil Cedex (FR); EL-OUARDI, Nour-Eddine, 94046 Créteil Cedex (FR)
(74) Mandataire: Delplanque, Arnaud
(86) Numéro de dépôt international: PCT/EP2017/074718
(87) Numéro de publication internationale: WO 2018/060384

(56) Documents cités:
- WO-A1-03/036455
- DE-A1-102010 010 574
- FR-A1- 3 033 422
- US-A1- 2014 350 784

## Description

La présente invention concerne une interface pour la commande d'au moins une fonction d'un organe de véhicule automobile. L'invention concerne également un procédé d'interfaçage.

Dans le domaine automobile, la commande d'organes électriques, comme le système de climatisation ou de navigation, est généralement réalisée au moyen d'un bouton rotatif mécanique. Celui-ci comporte généralement une molette dont le positionnement angulaire est déterminé par exemple par un capteur optique ou par un commutateur rotatif électrique. La position angulaire de la molette permet à une unité de traitement de sélectionner une commande particulière et de commander par exemple un actionneur de volet dans le système de climatisation ou permet à l'utilisateur d'accéder au clavier de saisie pour entrer une destination dans le système de navigation. Des pictogrammes sont généralement utilisés pour aider l'utilisateur à se repérer pour la sélection d'une commande. Cependant, cet environnement visuel autour du bouton est figé dans le temps et ne laisse pas de possibilités pour adapter les informations présentées à l'utilisateur en fonction de la manipulation du bouton.

On connait également un système de commande dans lequel on associe une molette rotative à un écran tactile. Dans ce système, une dalle tactile capacitive détecte la position angulaire d'un index métallique porté par la molette. La dalle tactile capacitive permet ainsi d'une part, la saisie tactile d'informations sur la dalle et d'autre part, de détecter la position angulaire de la molette montée rotative sur la dalle. Ce système est intéressant car il permet notamment de programmer l'affichage de l'écran tactile supportant la molette en relation avec différentes fonctions à commander. Par exemple, l'écran peut être programmé pour afficher la position des volets et la température du système de climatisation. Ce même écran avec molette peut également servir à l'affichage du réglage de paramètres du système audio du Un autre état de la technique pertinent est connu du FR 3 033 422 A1.

Un des buts de la présente invention est de proposer une interface et un procédé d'interfaçage qui permettent une manipulation plus aisée et intuitive de l'interface, sans surcharge visuelle, afin de ne pas gêner la conduite.

A cet effet, l'invention a pour objet une interface pour la commande d'au moins une fonction d'un organe de véhicule automobile, comportant :
- au moins un organe de commande comprenant :
   - une molette rotative,
   - au moins un index métallique porté par la molette rotative et mobile avec celle-ci,
   - un guide, la molette rotative étant supportée et guidée en rotation par le guide,
- une dalle tactile capacitive configurée pour détecter la position de l'index métallique, le guide étant fixé sur la dalle tactile capacitive, l'index métallique étant agencé en regard de la dalle tactile capacitive,
- un écran d'affichage agencé sous la dalle tactile capacitive, l'écran d'affichage et la dalle tactile capacitive étant au moins partiellement transparents,
l'interface étant configurée pour afficher sur l'écran d'affichage au moins un menu d'éléments à sélectionner, le menu présentant une forme au moins partiellement circulaire entourant l'organe de commande, et l'interface étant aussi configurée pour annuler une commande lorsque l'utilisateur appuie dans une zone prédéterminée de retour en arrière sur la dalle tactile capacitive, la molette rotative et le guide présentant des formes respectives de bagues présentant un orifice central et en ce que la zone prédéterminée de retour en arrière est située au niveau de l'orifice central de l'organe de commande.

L'affichage peut ainsi être reconfiguré continuellement en fonction de l'interaction avec l'utilisateur pour rendre l'interface facile à manipuler et sans surcharge visuelle. Le menu entourant l'organe de commande permet une navigation aisée dans les menus. La molette rotative, tangible, permet en outre de centraliser l'endroit de l'interface qui peut être manipulé. Egalement, la protubérance sur l'écran induit par la molette permet le guidage en aveugle de la main de l'utilisateur.

Selon une ou plusieurs caractéristiques de l'interface, prise seule ou en combinaison :
- l'interface est configurée pour afficher sur l'écran d'affichage un sous-menu d'éléments à sélectionner après qu'un élément a été sélectionné dans le menu, le sous-menu présentant une forme arrondie convexe dans le creux de laquelle est agencé l'organe de commande,
- l'interface est configurée pour afficher un curseur sur l'écran d'affichage pointant un élément à sélectionner dans le menu, la position du curseur étant déterminée par la position angulaire de la molette rotative,
- la zone prédéterminée de retour en arrière est située à l'extérieur de l'organe de commande,
- l'interface comporte au moins un capteur d'appui configuré pour mesurer un paramètre représentatif d'une force d'appui exercée sur la dalle tactile capacitive, l'interface étant en outre configurée pour valider le choix d'un élément sélectionné lorsque la dalle tactile capacitive détecte un contact de l'organe de commande et lorsqu'une force d'appui exercée sur la dalle tactile capacitive dépasse un seuil de détection.

L'invention a aussi pour objet un procédé d'interfaçage pour une interface telle que décrite précédemment, dans lequel un menu d'éléments à sélectionner est affiché autour de l'organe de commande, le menu présentant une forme au moins partiellement circulaire entourant l'organe de commande.

La rotation de la molette rotative peut permettre de déplacer l'affichage d'un curseur apte à sélectionner un élément du menu.

Un contact sur la dalle tactile capacitive notamment au niveau de l'orifice central de l'organe de commande, ou un appui sur la dalle tactile capacitive, notamment au niveau de l'orifice central de l'organe de commande, ou sur la molette rotative ou un tirage de l'organe de commande, peut permettre de valider une sélection d'un élément.

Au moins un sous-menu d'éléments à sélectionner peut s'afficher autour du menu, le sous-menu présentant une forme arrondie convexe dans le creux de laquelle est agencé au moins l'organe de commande.

D'autres caractéristiques et avantages de l'invention ressortiront de la description suivante, donnée à titre d'exemple et sans caractère limitatif, en regard des dessins annexés sur lesquels :
- la figure 1 représente une vue d'une portion de l'habitacle intérieur d'un véhicule automobile comprenant une interface qui est installée à titre d'exemple au niveau du panneau avant du véhicule,
- la figure 2 montre une vue partielle en coupe I-I de l'interface de la figure 1,
- la figure 3 montre une vue schématique de l'interface de la figure 2,
- la figure 4a montre une première étape d'un procédé d'interfaçage dans laquelle un menu d'éléments à sélectionner est affiché autour d'un organe de commande de l'interface,
- la figure 4b montre une deuxième étape du procédé d'interfaçage dans laquelle un sous-menu est affiché autour de l'organe de commande et du menu après validation de la sélection d'un élément du menu,
- la figure 4c montre une troisième étape du procédé d'interfaçage dans laquelle un élément du sous-menu est affiché après validation de sa sélection, et
- la figure 4d montre un autre exemple de réalisation de la troisième étape du procédé d'interfaçage.

Sur ces figures, les éléments identiques portent les mêmes numéros de référence.

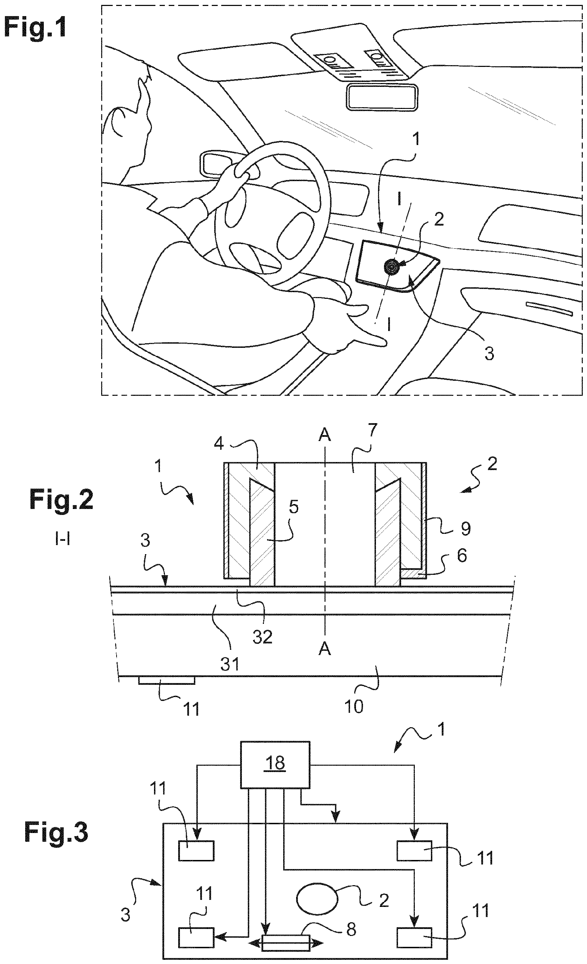

La figure 1 montre des éléments d'une partie avant d'habitacle de véhicule automobile.

L'habitacle comporte une interface 1 notamment propre à être logée dans le panneau avant du véhicule.

Une telle interface 1 permet la commande d'au moins une fonction d'un organe de véhicule automobile telle que la commande des fonctions d'un système de climatisation, d'un système audio, d'un système de téléphonie ou encore d'un système de navigation. Cette interface 1 peut également servir pour les commandes de lève-vitres, de positionnement des rétroviseurs extérieurs ou encore pour le déplacement de sièges motorisés ou pour commander des lumières intérieures, un verrouillage central, un toit ouvrant, les feux de détresse ou les lumières d'ambiance.

L'interface 1 permet par exemple à l'utilisateur le défilement parmi une liste, la sélection ou la validation d'une sélection. Elle permet par exemple à l'utilisateur de sélectionner une adresse postale de destination ou un nom dans un répertoire, les réglages du système de climatisation ou la sélection d'une piste musicale dans une liste.

L'interface 1 comporte au moins un organe de commande 2, une dalle tactile capacitive 3 et un écran d'affichage 10.

La figure 2 montre une vue partielle et en coupe plus détaillée de l'interface 1.

La dalle tactile capacitive 3 comprend au moins un capteur capacitif 31 et une plaque frontale 32 agencée sur le capteur capacitif 31.

Le capteur capacitif 31 permet de détecter une variation de capacité au niveau de la surface de la plaque frontale 32. Le capteur capacitif 31 peut par exemple détecter un contact ou un déplacement d'un doigt d'un utilisateur. Le capteur capacitif 31 permet également de déterminer les coordonnées spatiales du doigt dans le plan de la dalle 3. Le capteur capacitif 31 est par exemple formé d'un réseau d'électrodes s'étendant sur tout ou partie de la surface de la dalle. Les électrodes sont par exemple réalisées en ITO (oxyde indium - étain) qui permettent au capteur 31 d'être transparent.

La rigidité de la dalle tactile capacitive 3 est obtenue au moyen de la plaque frontale 32 (ou plaque de contact) rigide, telle qu'une plaque de verre. La plaque frontale 32 agencée sur le capteur capacitif 31 fait face à l'utilisateur une fois montée dans l'habitacle. La surface tactile de la dalle 3 est ainsi formée par la surface de la plaque frontale 32. Cette surface peut être plane ou courbe.

L'écran d'affichage 10, tel qu'un écran TFT (« Thin-Film transistor » en anglais) ou un écran LED ou un écran LCD est configuré pour afficher des informations associées à la manipulation de l'interface 1. L'écran 10 est disposé sous le capteur capacitif 31 de manière à former un écran tactile (« touchscreen » en anglais). Le capteur capacitif 31 et la plaque frontale 32 sont au moins partiellement transparents.

L'interface 1 peut également comporter un capteur d'appui 11 configuré pour mesurer un paramètre représentatif d'une force d'appui exercée sur la dalle tactile capacitive 3. Cette information permet notamment de mieux interpréter les commandes de l'utilisateur ayant touché la dalle tactile capacitive 3.

Le capteur d'appui 11 est par exemple disposé à l'arrière de l'écran d'affichage 10, lui-même fixé à la dalle 3 (figure 2). L'interface 1 comporte par exemple quatre capteurs d'appui 11, un capteur 11 étant agencé dans chaque coin de la dalle 3 (figure 3).

La mesure de la force d'appui est par exemple obtenue à partir d'une mesure capacitive du faible déplacement de la dalle 3 (non perceptible) résultant d'un appui exercé sur la dalle 3. La mesure capacitive du déplacement peut être réalisée par exemple au moyen d'une électrode fixée à l'arrière de l'écran tactile et en regard d'une partie fixe métallisée ou inversement, la partie métallisée étant disposée à l'arrière de l'écran tactile face à une électrode de mesure fixe.

La mesure de la force d'appui peut aussi être réalisée par mesure inductive ou par mesure ultrason ou par mesure de déformation au moyen de jauges de contrainte ou de capteurs FSR (pour « Force Sensing Resistor » en anglais).

Une unité de traitement 18 peut être reliée aux capteurs d'appui 11 et au capteur capacitif 31 (figure 3). L'unité de traitement 18 comporte un ou plusieurs microcontrôleurs ou ordinateurs, ayant des mémoires et programmes adaptés pour modifier l'affichage de l'écran 10, pour recevoir les informations de position détectées par la dalle tactile capacitive 3 et pour recevoir les signaux de mesure des capteurs 11. C'est par exemple l'ordinateur de bord du véhicule automobile. L'unité de traitement 18 peut être configurée pour évaluer une force d'appui à partir des capteurs d'appui 11 notamment en additionnant les forces mesurées par chaque capteur 11.

Un exemple d'organe de commande 2 est également visible sur la vue en coupe de la figure 2.

On voit sur cette figure que l'organe de commande 2 comporte une molette rotative 4, au moins un index métallique 6 porté par la molette rotative 4 et mobile en rotation avec celle-ci et un guide 5 (ou palier), la molette rotative 4 étant supportée et guidée en rotation par le guide 5.

Le guide 5 est fixé sur la dalle tactile capacitive 3, par exemple par collage.

Le guide 5 est par exemple positionné sur une ligne sensiblement médiane du plan de la dalle tactile capacitive 3 (figure 1), par exemple au milieu ou en bordure de celle-ci. L'interface 1 peut comporter un ou plusieurs organes de commande 2, deux par exemple, un à destination du conducteur et l'autre à destination du passager.

La molette rotative 4 est mobile en rotation autour d'un axe de rotation A perpendiculaire à la surface de la dalle tactile capacitive 3. La molette rotative 4 et le guide 5 présentent par exemple des formes générales cylindriques coaxiales.

Selon un exemple de réalisation, la molette rotative 4 et le guide 5 présentent des formes respectives de bagues coaxiales et opaques, avec un orifice central 7 traversant. L'utilisateur peut ainsi toucher ou exercer un appui sur la dalle tactile capacitive 3, directement ou par l'intermédiaire d'une entretoise fixée sur la dalle tactile capacitive 3 dans l'orifice central 7. Egalement, l'utilisateur peut voir l'affichage de l'écran d'affichage 10 à travers l'organe de commande 2, dans l'orifice central 7 de la molette 4. L'entretoise de l'interface 1 peut être réalisée en matériau transparent ou peut présenter un guide de lumière interposé entre l'écran 10 et un pictogramme en face supérieure, permettant un rétroéclairage du pictogramme de l'organe de commande 2.

L'extrémité de la molette rotative 4 en regard de la dalle tactile capacitive 3 porte au moins un index métallique 6 qui est ainsi agencé en vis-à-vis de la dalle tactile capacitive 3. Il s'agit par exemple d'une languette métallique, par exemple en Cuivre.

L'index métallique 6 est électriquement connecté à des surfaces métalliques externes 9 de la molette rotative 4 destinées à être manipulées par l'utilisateur.

Pour cela, la molette rotative 4 est par exemple entièrement réalisée en matériau métallique.

Selon un autre exemple, la molette rotative 4 comporte un revêtement agencé au niveau des surfaces externes de préhension, tel qu'une enveloppe chromée connectée à l'index métallique 6.

En touchant les surfaces métalliques externes 9 électriquement connectées à l'index métallique 6, l'utilisateur amène des charges électriques en regard de la dalle tactile capacitive 3 qui sont alors détectées par le capteur capacitif 31. La détection de ces charges dans la zone de l'organe de commande 2 permet d'en déduire le contact de l'organe de commande 2 par l'utilisateur. La détermination des coordonnées de l'index métallique 6 par la dalle tactile capacitive 3 permet de déterminer la position angulaire de l'index métallique 6 mobile au-dessus de la dalle tactile capacitive 3.

L'interface 1 peut aussi comporter au moins un actionneur vibratoire 8 permettant de faire vibrer la surface de la dalle tactile capacitive 3 en réponse à la détection d'un contact ou d'un déplacement d'un doigt sur la dalle tactile capacitive 3. La possibilité de faire vibrer la dalle 3 peut permettre ici aussi de faire vibrer l'organe de commande 2 fixé sur la dalle 3.

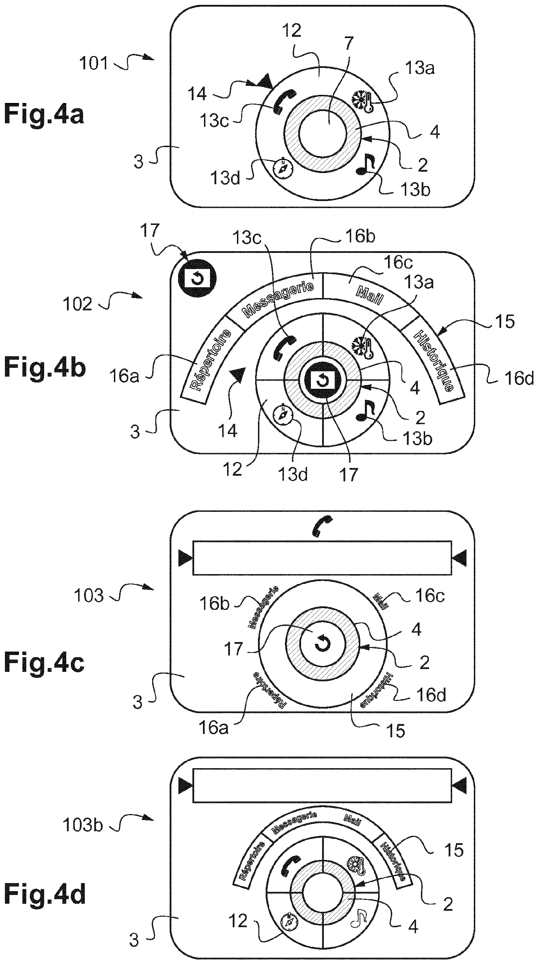

L'interface 1 est en outre configurée pour afficher sur l'écran d'affichage 10 disposé sous la dalle tactile capacitive 3, un menu 12 d'éléments 13a, 13b, 13c, 13d à sélectionner, le menu 12 présentant une forme au moins partiellement circulaire entourant l'organe de commande 2 (figure 4a).

Les éléments 13a, 13b, 13c, 13d à sélectionner dans le menu 12 sont par exemple des icônes, pictogrammes, symboles ou écritures, se rapportant par exemple au système de climatisation 13a, au système audio 13b, au système de téléphonie 13c et au système de navigation 13d.

Le menu 12 affiché sur l'écran d'affichage 10 sous la dalle tactile capacitive 3 présente par exemple une forme d'anneau. L'anneau est situé à proximité immédiate de la molette rotative 4, par exemple sans interstice entre les deux.

On peut aussi prévoir que l'interface 1 soit configurée pour afficher un curseur 14 sur l'écran d'affichage 10 pointant un élément à sélectionner dans le menu 12. La position du curseur 14 est déterminée par la position angulaire de la molette rotative 4. Ainsi, lorsque l'utilisateur tourne la molette 4 dans un sens, l'affichage du curseur 14 est déplacé en conséquence pour sélectionner un élément suivant du menu 12 et lorsque l'utilisateur tourne la molette 4 dans l'autre sens, l'affichage du curseur 14 est déplacé dans le sens contraire pour sélectionner un élément précédent du menu 12.

Ce pointage (ou sélection) d'un élément dans le menu 12 peut être validé par différents moyens.

Par exemple, la sélection de l'élément 13a, 13b, 13c, 13d peut être validée par simple appui sur la molette rotative 4. Pour cela, l'interface 1 comporte au moins un capteur d'appui 11 comme décrit plus haut. L'interface 1 est alors configurée pour commander la validation lorsque la dalle tactile capacitive 3 détecte un contact de l'organe de commande 2 et lorsqu'une force d'appui exercée sur la dalle tactile capacitive 3 est supérieure à un seuil de détection.

Selon un autre exemple, la sélection de l'élément est validée lorsque l'utilisateur essaie de tirer la molette rotative 4. Bien que la molette rotative 4 ne soit pas montée mobile axialement, l'effort exercé par l'utilisateur qui tire sur la molette 4 peut être détecté par le capteur d'appui 11 pour valider la sélection lorsque la force d'appui exercée est inférieure à un seuil bas prédéterminé.

Selon un autre exemple, la proximité du menu 12 avec l'organe de commande 2 peut permettre à l'utilisateur de sélectionner un élément du menu 12 en touchant ou en appuyant sur la dalle tactile capacitive 3, au-dessus du menu 12, avec un de ses doigts tandis que les autres doigts de la main peuvent rester en contact avec la molette rotative 4.

Selon un autre exemple, l'utilisateur peut valider la sélection d'un élément par contact ou appui sur la dalle 3 dans l'orifice central 7 de l'organe de commande 2.

La manipulation de l'interface 1 peut ainsi être réalisée d'une seule main, l'autre main pouvant rester sur le volant. Cela permet une manipulation aisée et intuitive.

La molette rotative 4, tangible, permet en outre de centraliser l'endroit de l'interface 1 qui peut être manipulé. L'utilisateur sait où poser ses doigts et où il est sensé toucher l'interface 1, ce qui évite les fausses manipulations. Egalement, la protubérance sur l'écran induit par la molette 4 permet de guider l'utilisateur en aveugle, par exemple pour lui éviter de détacher les yeux de la route ou en conduite de nuit.

Après validation de la sélection d'un élément 13c par l'utilisateur, l'interface 1 peut désactiver la possibilité de sélection des autres éléments du menu 12. L'affichage du menu 12 peut également être reprogrammé par exemple pour afficher en grisé les éléments 13a, 13b, 13d qui n'ont pas été sélectionnés ou pour diminuer leur taille. Cela permet d'éviter l'affichage d'informations devenues inutiles ou non demandées, ne laissant plus de place pour afficher les autres informations à présenter à l'utilisateur.

L'interface 1 peut être configurée pour permettre une annulation de commande de manière à annuler la dernière action commandée (sélection ou validation) lorsque l'utilisateur appuie dans une zone prédéterminée de retour en arrière 17 sur la dalle tactile capacitive 3. L'interface 1 peut être programmée pour annuler la commande seulement lorsque la durée du contact sur la dalle 3 est supérieure à un seuil ou si la force exercée sur la dalle 3 est supérieure à un seuil.

La zone prédéterminée de retour en arrière 17 peut être située n'importe où sur la dalle tactile capacitive 3, comme par exemple à l'extérieur de l'organe de commande 2, tel que dans un coin la dalle 3 (figure 4b) ou au niveau de l'orifice central 7 de l'organe de commande 2 (figure 4b).

Cette validation peut par exemple permettre le déploiement d'un sous-menu 15 ou la commande d'une fonction d'un organe de véhicule automobile ou la saisie d'une valeur de paramètres.

Par exemple, après validation, l'interface 1 peut être configurée pour afficher un sous-menu 15 d'éléments 16a, 16b, 16c, 16d à sélectionner (figure 4b). Ce sous-menu 14 présente une forme arrondie convexe, par exemple sensiblement en étrier ou arc de cercle, dans le creux de laquelle est agencé l'organe de commande 2 et éventuellement, le menu 12.

Les éléments 16a, 16b, 16c, 16d à sélectionner dans le sous-menu 15 sont par exemple des icônes, pictogrammes, symboles ou écritures, se rapportant à l'élément 13c sélectionné du menu 12. Dans l'exemple, ces éléments se rapportent au sous-menu 15 du système de téléphonie 13c tels que le répertoire 16a, la messagerie 16b, les mails 16c et l'historique des appels 16d.

La validation de la sélection d'un élément dans le sous-menu peut être réalisée de différentes manières comme pour la validation de sélection d'un élément du menu. La forme arrondie convexe est située à proximité de la molette rotative 4 et enveloppe partiellement celle-ci. Cette proximité peut permettre à l'utilisateur de sélectionner un élément du sous-menu 15 en touchant ou en appuyant dessus avec un de ses doigts tandis que les autres doigts de la main restent en contact avec la molette rotative 4.

Cette validation peut par exemple permettre le déploiement d'un autre sous-menu 15 ou la commande d'une fonction d'un organe de véhicule automobile ou la saisie d'une valeur de paramètres.

Ainsi, selon un exemple de fonctionnement, un menu 12 d'éléments 13a, 13b, 13c, 13d à sélectionner est affiché sur l'interface 1 autour de l'organe de commande 2 (première étape 101 du procédé d'interfaçage 100 ; figure 4a).

L'utilisateur tourne la molette 4 pour déplacer l'affichage du curseur 14 et sélectionner un élément 13c du menu 12.

L'interface 1 peut générer un retour vibratoire programmable en fonction des manipulations de l'utilisateur, tel qu'en fonction de l'angle de rotation de la molette rotative 4.

Puis, l'utilisateur valide son choix, par exemple en appuyant sur l'élément affiché, par exemple au niveau de l'orifice central 7 de l'organe de commande 2, ou en appuyant sur la molette rotative 4.

Un sous-menu 15 d'éléments 16a, 16b, 16c, 16d à sélectionner s'affiche alors autour de l'organe de commande 2 (deuxième étape 102 du procédé d'interfaçage 100 ; figure 4b).

Les éléments 13a, 13b, 13d qui n'ont pas été sélectionnés s'affichent en grisé. Egalement, une zone prédéterminée de retour en arrière 17 s'affiche sur l'écran d'affichage 10 (dans un coin ou dans l'orifice central 7 de l'organe de commande 2) pour permettre une annulation de la commande de validation.

L'utilisateur tourne à nouveau la molette 4 pour déplacer le curseur 14 dans le sous-menu 15 et sélectionner un élément 16a, 16b, 16c, 16d. Comme précédemment, l'utilisateur peut valider la sélection en touchant ou appuyant sur la dalle 3 ou sur la molette 4.

L'élément 16a sélectionné du sous-menu 15, ici le répertoire, s'affiche sur l'écran 10, par exemple au-dessus du menu 12, sous-menu 15 et organe de commande 2 (troisième étape 103 du procédé d'interfaçage 100 ; figure 4c).

L'affichage des éléments du menu 12 principal peut être remplacé par l'affichage des éléments du sous-menu 15. Ce dernier peut ainsi être affiché avec une forme annulaire similaire à celle du menu 12, les éléments 16b, 16c, 16d non sélectionnés apparaissant en grisé.

Selon un autre exemple, le menu 12 et tous les éventuels sous-menus 15 sont affichés en permanence autour de l'organe de commande 2 (troisième étape 103b du procédé d'interfaçage 100 ; figure 4d).

On comprend ainsi que l'affichage peut ainsi être reconfiguré continuellement en fonction de l'interaction avec l'utilisateur pour rendre l'interface 1 facile à manipuler et sans surcharge visuelle.

Le menu entourant l'organe de commande et la possibilité de valider la sélection par appui sur la molette 4 ou sur le menu affiché à proximité de la molette 4, permettent une navigation aisée dans les menus.

La molette rotative 4, tangible, permet en outre de centraliser l'endroit de l'interface 1 qui peut être manipulé. Egalement, la protubérance sur l'écran induit par la molette 4 permet le guidage en aveugle de la main de l'utilisateur.

## Revendications

1. Interface (1) pour la commande d'au moins une fonction d'un organe de véhicule automobile, comportant :
- au moins un organe de commande (2) comprenant :
- une molette rotative (4),
- au moins un index métallique (6) porté par la molette rotative (4) et mobile avec celle-ci,
- un guide (5), la molette rotative (4) étant supportée et guidée en rotation par le guide (5),
- une dalle tactile capacitive (3) configurée pour détecter la position de l'index métallique (6), le guide (5) étant fixé sur la dalle tactile capacitive (3), l'index métallique (6) étant agencé en regard de la dalle tactile capacitive (3),
- un écran d'affichage (10) agencé sous la dalle tactile capacitive (3), l'écran d'affichage (10) et la dalle tactile capacitive (3) étant au moins partiellement transparents,
l'interface (1) est configurée, pour afficher sur l'écran d'affichage (10) au moins un menu (12) d'éléments (13a, 13b, 13c, 13d) à sélectionner, le menu (12) présentant une forme au moins partiellement circulaire entourant l'organe de commande (2), et **caractérisée en ce que** l'interface est aussi configurée pour annuler une commande lorsque l'utilisateur appuie dans une zone prédéterminée de retour en arrière (17) sur la dalle tactile capacitive (3), la molette rotative (4) et le guide (5) présentant des formes respectives de bagues présentant un orifice central (7) et **en ce que** la zone prédéterminée de retour en arrière (17) est située au niveau de l'orifice central (7) de l'organe de commande (2).

2. Interface (1) selon la revendication précédente, **caractérisée en ce qu'**elle est configurée pour afficher sur l'écran d'affichage (10) un sous-menu (15) d'éléments (16a, 16b, 16c, 16d) à sélectionner après qu'un élément (13a, 13b, 13c, 13d) a été sélectionné dans le menu (12), le sous-menu (15) présentant une forme arrondie convexe dans le creux de laquelle est agencé l'organe de commande (2).

3. Interface (1) selon l'une des revendications précédentes, **caractérisée en ce qu'**elle est configurée pour afficher un curseur (14) sur l'écran d'affichage (10) pointant un élément (13a, 13b, 13c, 13d) à sélectionner dans le menu (12), la position du curseur (14) étant déterminée par la position angulaire de la molette rotative (4).

4. Interface (1) selon l'une des revendications précédentes, **caractérisée en ce qu'**elle comporte au moins un capteur d'appui (11) configuré pour mesurer un paramètre représentatif d'une force d'appui exercée sur la dalle tactile capacitive (3), l'interface (1) étant en outre configurée pour valider le choix d'un élément sélectionné lorsque la dalle tactile capacitive (3) détecte un contact de l'organe de commande (2) et lorsqu'une force d'appui exercée sur la dalle tactile capacitive (3) dépasse un seuil de détection.

5. Procédé d'interfaçage (100) pour une interface (1) selon l'une des revendications précédentes, dans lequel un menu (12) d'éléments (13a, 13b, 13c, 13d) à sélectionner est affiché autour de l'organe de commande (2), le menu (12) présentant une forme au moins partiellement circulaire entourant l'organe de commande (2).

6. Procédé d'interfaçage (100) selon la revendication précédente, dans lequel la rotation de la molette rotative (4) déplace l'affichage d'un curseur (14) apte à sélectionner un élément (13c) du menu (12).

7. Procédé d'interfaçage (100) selon l'une des revendications 5 ou 6, dans lequel un contact sur la dalle tactile capacitive (3) ou un appui sur la dalle tactile capacitive (3) ou sur la molette rotative (4) ou un tirage de l'organe de commande (2) valide une sélection d'un élément.

8. Procédé d'interfaçage (100) selon l'une des revendications 5 à 7, dans lequel au moins un sous-menu (15) d'éléments (16a, 16b, 16c, 16d) à sélectionner s'affiche autour du menu (12), le sous-menu (15) présentant une forme arrondie convexe dans le creux de laquelle est agencé au moins l'organe de commande (2).

## Patentansprüche

1. Schnittstelle (1) zur Steuerung wenigstens einer Funktion eines Organs eines Kraftfahrzeugs, welche aufweist:
- wenigstens ein Steuerorgan (2), welches umfasst:
- ein drehbares Rädchen (4),
- wenigstens einen metallischen Zeiger (6), der von dem drehbaren Rädchen (4) getragen wird und mit diesem beweglich ist,
- eine Führung (5), wobei das drehbare Rädchen (4) von der Führung (5) gestützt und drehbar geführt wird,
- ein kapazitives Touchpanel (3), das dafür ausgelegt ist, die Position des metallischen Zeigers (6) zu erkennen, wobei die Führung (5) auf dem kapazitiven Touchpanel (3) befestigt ist, wobei der metallische Zeiger (6) gegenüber dem kapazitiven Touchpanel (3) angeordnet ist,
- einen Anzeigebildschirm (10), der unter dem kapazitiven Touchpanel (3) angeordnet ist, wobei der Anzeigebildschirm (10) und das Touchpanel (3) wenigstens teilweise transparent sind,
wobei die Schnittstelle (1) dafür ausgelegt ist, auf dem Anzeigebildschirm (10) wenigstens ein Menü (12) von auszuwählenden Elementen (13a, 13b, 13c, 13d) anzuzeigen, wobei das Menü (12) eine wenigstens teilweise kreisförmige Gestalt aufweist, die das Steuerorgan (2) umgibt, und **dadurch gekennzeichnet ist, dass** die Schnittstelle außerdem dafür ausgelegt ist, einen Befehl zu annullieren, wenn der Benutzer in einen vorbestimmten Rückstellbereich (17) auf dem kapazitiven Touchpanel (3) drückt, wobei das drehbare Rädchen (4) und die Führung (5) jeweils die Form eines Ringes aufweisen, der eine zentrale Öffnung (7) aufweist, und dadurch, dass sich der vorbestimmte Rückstellbereich (17) an der zentralen Öffnung (7) des Steuerorgans (2) befindet.

2. Schnittstelle (1) nach dem vorhergehenden Anspruch, **dadurch gekennzeichnet, dass** sie dafür ausgelegt ist, auf dem Anzeigebildschirm (10) ein Untermenü (15) von auszuwählenden Elementen (16a, 16b, 16c, 16d) anzuzeigen, nachdem ein Element (13a, 13b, 13c, 13d) im Menü (12) ausgewählt worden ist, wobei das Untermenü (15) eine konvexe gewölbte Form aufweist, in deren Wölbung das Steuerorgan (2) angeordnet ist.

3. Schnittstelle (1) nach einem der vorhergehenden Ansprüche, **dadurch gekennzeichnet, dass** sie dafür ausgelegt ist, einen Cursor (14) auf dem Anzeigebildschirm (10) anzuzeigen, der auf ein auszuwählendes Element (13a, 13b, 13c, 13d) im Menü (12) zeigt, wobei die Position des Cursors (14) durch die Winkelposition des drehbaren Rädchens (4) bestimmt wird.

4. Schnittstelle (1) nach einem der vorhergehenden Ansprüche, **dadurch gekennzeichnet, dass** sie wenigstens einen Andrucksensor (11) aufweist, der dafür ausgelegt ist, einen Parameter zu messen, der für eine auf das kapazitive Touchpanel (3) ausgeübte Andruckkraft repräsentativ ist, wobei die Schnittstelle (1) außerdem dafür ausgelegt ist, die Wahl eines ausgewählten Elements zu validieren, wenn das kapazitive Touchpanel (3) einen Kontakt des Steuerorgans (2) erkennt und wenn eine auf das kapazitive Touchpanel (3) ausgeübte Andruckkraft einen Detektionsschwellenwert überschreitet.

5. Schnittstellenverfahren (100) für eine Schnittstelle (1) nach einem der vorhergehenden Ansprüche, wobei ein Menü (12) von auszuwählenden Elementen (13a, 13b, 13c, 13d) um das Steuerorgan (2) herum angezeigt wird, wobei das Menü (12) eine wenigstens teilweise kreisförmige Gestalt aufweist, die das Steuerorgan (2) umgibt.

6. Schnittstellenverfahren (100) nach dem vorhergehenden Anspruch, wobei die Drehung des drehbaren Rädchens (4) die Anzeige eines Cursors (14) bewegt, der geeignet ist, ein Element (13c) aus dem Menü (12) auszuwählen.

7. Schnittstellenverfahren (100) nach einem der Ansprüche 5 oder 6, wobei ein Kontakt mit dem kapazitiven Touchpanel (3) oder ein Druck auf das kapazitive Touchpanel (3) oder auf das drehbare Rädchen (4) oder ein Ziehen des Steuerorgans (2) eine Auswahl eines Elements validiert.

8. Schnittstellenverfahren (100) nach einem der Ansprüche 5 bis 7, wobei wenigstens ein Untermenü (15) von auszuwählenden Elementen (16a, 16b, 16c, 16d) um das Menü (12) herum angezeigt wird, wobei das Untermenü (15) eine konvexe gewölbte Form aufweist, in deren Wölbung wenigstens das Steuerorgan (2) angeordnet ist.

## Claims

1. Interface (1) for controlling at least one function of a motor vehicle member, comprising:
- at least one control member (2) comprising:
- a rotary thumbwheel (4),
- at least one metal index (6) borne by the rotary thumbwheel (4) and that can move therewith,
- a guide (5), the rotary thumbwheel (4) being supported and guided in rotation by the guide (5),
- a capacitive touchscreen (3) configured to detect the position of the metal index (6), the guide (5) being fixed to the capacitive touchscreen (3), the metal index (6) being arranged facing the capacitive touchscreen (3),
- a display screen (10) arranged under the capacitive touchscreen (3), the display screen (10) and the capacitive touchscreen (3) being at least partially transparent,
the interface (1) is configured to display, on the display screen (10), at least one menu (12) of items (13a, 13b, 13c, 13d) to be selected, the menu (12) having an at least partially circular form surrounding the control member (2), and; **characterized in that** the interface is also configured to cancel a command when the user presses in a predetermined rollback zone (17) on the capacitive touchscreen (3), the rotary thumbwheel (4) and the guide (5) having respective ring forms having a central orifice (7) and **in that** the predetermined rollback zone (17) is situated at the central orifice (7) of the control member (2).

2. Interface (1) according to the preceding claim, **characterized in that** it is configured to display on the display screen (10) a submenu (15) of items (16a, 16b, 16c, 16d) to be selected after an item (13a, 13b, 13c, 13d) has been selected in the menu (12), the submenu (15) having a convex rounded form in the hollow of which the control member (2) is arranged.

3. Interface (1) according to one of the preceding claims, **characterized in that** it is configured to display a cursor (14) on the display screen (10) pointing to an item (13a, 13b, 13c, 13d) to be selected in the menu (12), the position of the cursor (14) being determined by the angular position of the rotary thumbwheel (4).

4. Interface (1) according to one of the preceding claims, **characterized in that** it comprises at least one bearing sensor (11) configured to measure a parameter representative of a bearing force exerted on the capacitive touchscreen (3), the interface (1) being also configured to validate the choice of a selected item when the capacitive touchscreen (3) detects a contact of the control member (2) and when a bearing force exerted on the capacitive touchscreen (3) exceeds a detection threshold.

5. Interfacing method (100) for an interface (1) according to one of the preceding claims, wherein a menu (12) of items (13a, 13b, 13c, 13d) to be selected is displayed around the control member (2), the menu (12) having an at least partially circular form surrounding the control member (2).

6. Interfacing method (100) according to the preceding claim, wherein the rotation of the rotary thumbwheel (4) displaces the display of a cursor (14) capable of selecting an item (13c) of the menu (12).

7. Interfacing method (100) according to one of Claims 5 and 6, wherein a contact on the capacitive touchscreen (3) or a press on the capacitive touchscreen (3) or on the rotary thumbwheel (4) or a pull on the control member (2) validates a selection of an item.

8. Interfacing method (100) according to one of Claims 5 to 7, wherein at least one submenu (15) of items (16a, 16b, 16c, 16d) to be selected is displayed around the menu (12), the submenu (15) having a convex rounded form in the hollow of which at least the control member (2) is arranged.
